# EUROPEAN PATENT APPLICATION

(11) **EP 4 823 096 A1**
(43) Date of publication of application: **14.10.2026**
(21) Application number: 26155679.9
(22) Date of filing: 02.02.2026
(51) Int. Cl.: H04N 19/46, H04N 19/85, G06T 11/10, G06T 5/00

(54) **NOISE SAMPLING COORDINATE TECHNIQUES FOR REPRODUCIBLE TEXTURE SYNTHESIS**

(30) Priority: 10.04.2025 US 202563786394 P; 12.12.2025 US 202519418334
(71) Applicant: INTEL Corporation, Santa Clara, CA 95054 (US)
(72) Inventor: POSSOS, Sebastian, Sammamish, 98074 (US); AHSAN, Syed, Folsom, 95630 (US); MOCCAGATTA, Iole, San Jose, 95132 (US); HOLLAND, James Michael, Folsom, 95630 (US)
(74) Representative: HGF

(57) **Abstract**

Systems and methods are provided herein for efficient, reproducible noise sampling coordinate generation for texture synthesis in image and video processing. The techniques enable high-quality film grain or texture synthesis as a post-processing step in video decoders, masking compression artifacts and restoring perceptual quality. Hash-based mapping, including direct coordinate mapping and linear index hashing, can be used to generate coordinates for noise sampling by hashing image block coordinates and a seed with preselected constants to generate sampling positions. Shuffled permutation sampling can be used to generate coordinates by generating and shuffling a list of template coordinates using a seeded pseudo-random number generator, and assigning unique positions to each block. Wrap-around addressing, including treating the noise template as a toroidal space, can be used to maximize coverage and eliminate edge bias. The disclosed techniques provide deterministic, hardware-friendly, and unbiased sampling.

## Description

### Cross-Reference to Priority Application

This application claims the benefit of U.S. Provisional Patent Application No. 63/786,394, filed April 10, 2025, entitled "EFFICIENT NOISE SAMPLING COORDINATE STRATEGIES FOR REPRODUCIBLE TEXTURE SYSTHESIS", which is incorporated by reference in its entirety for all purposes.

### Background

Video processing is a pervasive technology, seamlessly integrating into numerous domains of digital technology and artificial intelligence. From smartphone cameras that instantaneously apply computational photography techniques to advanced machine learning models that can detect objects, track movement, and recognize complex visual patterns, video processing plays a big role in modern technology.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 is a block diagram illustrating an example system for hash-based mapping to select a region from a noise template to use for texture synthesis for a block of an image, in accordance with various embodiments.
FIG. 2 is an example distribution plot illustrating hashed index coordinate usage within a noise template based on direct coordinate hashing, according to various embodiments.
FIG. 3 is a flow chart illustrating an example method generating sampling coordinates within a noise template using a direct coordinate hashing approach, in accordance with various embodiments.
FIG. 4 is an example distribution plot illustrating hashed index coordinate usage within a noise template based on linear index hashing, according to various embodiments.
FIG. 5 is a flow chart illustrating an example method for generating sampling coordinates within a noise template using a linear index hashing approach, in accordance with various embodiments.
FIG. 6 is a block diagram illustrating an example system for shuffled permutation sampling to select a region from a noise template to use for texture synthesis for a block of an image, in accordance with various embodiments.
FIG. 7 is a flow chart illustrating an example method for shuffled permutation sampling, in accordance with various embodiments.
FIG. 8 is an example distribution plot illustrating shuffled permutation sampling usage within a noise template, according to various embodiments.
FIG. 9 illustrates a table, which presents a comparative analysis of multiple coordinate generation methods for noise sampling, in accordance with various embodiments.
FIG. 10 depicts a block diagram of an exemplary computing device, according to some embodiments of the disclosure.

### Detailed Description

### Overview

In video and image procession, texture synthesis can be used to restore the fine-grained visual details that are often lost during compression and/or denoising operations. In particular, texture synthesis refers to the process of generating or reconstructing texture patterns that exhibit the statistical and perceptual properties of natural or artificial surfaces. One type of texture synthesis is film grain synthesis, which can involve the generation of noise patterns that emulate the characteristic random appearance of analog film grain. Film grain synthesis can be applied as a post-processing step following video decoding, where synthesized grain is overlaid onto decoded frames to enhance perceptual quality, mask compression artifacts, and restore the natural look and feel of the original content. Achieving high-quality film grain synthesis includes not only the faithful reproduction of grain statistics but also the uniform and unbiased sampling of noise templates, ensuring that the resulting texture appears both natural and free from visible artifacts or repetitive patterns.

Conventional approaches to texture synthesis have relied on techniques such as linear feedback shift registers (LFSRs), pseudo-random number generators, or fixed scan orders for selecting coordinates within a noise template. While these methods offer simplicity, they suffer from significant drawbacks. For example, LFSR-based sampling often exhibits periodicity and correlation between successive coordinates, leading to structured patterns rather than truly random distributions. Similarly, fixed scan orders or deterministic traversal schemes fail to achieve uniform coverage of the template space, resulting in localized clustering and non-uniform sampling. These deficiencies manifest as perceptual artifacts, including visible banding, repetitive grain structures, and unnatural noise patterns, which degrade the visual quality of reconstructed images and video frames. Attempts to mitigate these issues through oversampling or template enlargement increase computational complexity and memory requirements, making such solutions impractical for real-time video processing pipelines.

According to various implementations, systems and methods are provided herein for a coordinate generation strategy that ensures complete and balanced utilization of the template space, and eliminates sampling bias. Additionally, the techniques provided herein can be efficiently implemented in hardware or software pipelines. In various implementations, the disclosed techniques use a randomized yet deterministic mapping approach that results in uniform distribution of sampled positions across the entire noise template. In contrast to other techniques such as LFSR or fixed-order schemes, the techniques provided herein avoid spatial correlation between coordinates and prevent repetitive patterns, thereby producing visually pleasing and statistically accurate texture synthesis results.

In some implementations, the systems and methods provided herein provide two classes of coordinate generation strategies for deterministic and efficient sampling from spatial noise templates: hash-based mapping and shuffled permutation sampling. In the hash-based mapping approach, sampling coordinates are derived by applying hashing, mixing, or modular arithmetic functions to spatial identifiers (such as block indices or coordinates) and an optional seed value. This class includes methods such as direct coordinate hashing (where the block position and seed are combined and hashed to yield a template coordinate), and linear index hashing (in which a sequential block index is hashed to produce a sampling position). The hash-based techniques are stateless, utilize minimal computational resources, and are well-suited for hardware implementation. In particular, the hash-based techniques rely on basic arithmetic operations and do not utilize memory for storing coordinate lists.

In the shuffled permutation sampling approach, a shuffled list of valid template positions is precomputed using a seeded pseudo-random number generator. Each block is then assigned a unique coordinate from the shuffled list in a sequential manner, ensuring complete and unbiased coverage of the template space. The shuffled list may be generated once per frame or refreshed periodically. In general, using the shuffled list supports reproducible sampling patterns. While the shuffled sampling approach approach utilizes a small amount of memory to store the shuffled coordinate list, the approach achieves a high degree of uniformity and spatial decorrelation among sampled positions, thereby minimizing perceptual artifacts.

According to various implementations, both the hash-based mapping approach and the shuffled permutation sampling approach are compatible with optional wrap-around (toroidal) addressing. Wrap-around addressing further enhances spatial diversity and eliminates edge bias by allowing sampling coordinates to traverse template boundaries seamlessly. In some examples, the selection between hash-based mapping and shuffled permutation sampling may be guided by implementation constraints, such as hardware resource availability, desired randomness properties, and/or a desire for reproducibility or parallelization within the texture synthesis pipeline.

The techniques presented herein further provide scalability across different template sizes and grain characteristics. For example, the coordinate generation algorithm can adapt to varying resolutions, aspect ratios, and noise models without compromising uniformity or randomness. This adaptability ensures that the synthesized texture maintains perceptual consistency across diverse content types, including high-definition video, ultra-high-definition formats, and still images. Additionally, the systems and methods support parallelization, allowing multiple coordinate streams to be generated concurrently for multi-threaded or parallel implementations.

According to various implementations, the systems and methods presented herein provide increased visual quality through the elimination of structured artifacts, enhanced realism by preserving the stochastic nature of film grain, and reduced computational overhead compared to conventional oversampling techniques. By providing unbiased sampling and efficient implementation, the systems and methods enable high-quality texture synthesis in resource-constrained environments such as mobile devices, embedded systems, and consumer electronics. Furthermore, the techniques facilitate compliance with emerging video coding standards that mandate film grain synthesis as part of perceptual quality enhancement, thereby providing a solution for next-generation multimedia applications.

### Example Hash-Based Mapping System and Method

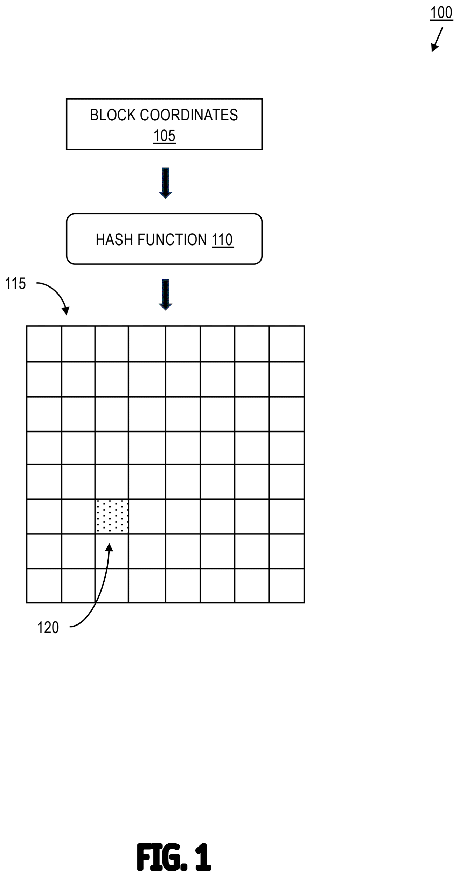

FIG. 1 is a block diagram illustrating an example system 100 for hash-based mapping to select a region from a noise template to use for texture synthesis for a block of an image, in accordance with various embodiments. The system 100 includes a hash function module 110, a noise template 115, and a sample region 120. Using the system 100, sample regions 120 can be selected to identify noise patches that can be overlaid onto decoded video frames or images to restore natural grain and mask compression artifacts, thereby improving perceptual quality and masking compression artifacts while preserving a "cinematic" feel.

In various implementations, the hash function module 110 receives the block coordinates 105 for an image block of a decoded image, and selects the sample region 120 from the noise template 115. In particular, for each image block of a decoded image to which texture is to be applied, the hash function module 110 selects a set of coordinates from the noise template 115. The set of coordinates identifies the selected sample region 120 of the noise template 115 to use for the texture application on the image. For instance, the set of coordinates can represent the top-left corner of the sample region 120 within the noise template. In other examples, the set of coordinates can represent any other selected coordinates within (or with respect to) the sample region 120. To select the set of coordinates, the hash function receives as input: (1) the position of the block to which the texture is to be applied in the image (*i.e.,* the x and y coordinates of the block in the image, or a block index), (2) a seed value, which can change per frame and/or scene to provide variety, and (3) some pre-selected constants. The pre-selected constants can be fixed numerical values (*e.g*., large prime numbers) that are used in the hash formula to mix the input variable and generate a well-distributed result. The hash function module 110 uses the inputs to generate a set of coordinates in the noise template 115 that identifies the sample region 120.

The block coordinates 105 can include a per-block (block_x, block_y) coordinate pair. In some examples, the block coordinates 105 can include a row-major linear block index, a per-frame or per-scene seed, and a set of validity rules. The hash function module 110 can determine sampling offsets into the noise template 115 using hash-based mapping. The hash function module 110 can implement one or more stateless operations based on addition, multiplication, modular reduction, and mixing. The hash function module thereby avoids large lookup tables.

The noise template 115 can include a two-dimensional array (e.g., a 64×64 template). In some examples, the noise template 115 can be generated based on provided synthesis parameters. In various examples, the synthesis parameters used to generate the noise template 115 can be signaled in the video bitstream, included as metadata, or set by an encoder. The synthesis parameters describe the characteristics of the desired noise, such as the intensity, color, and/or grain size. In some examples, the synthesis parameters can include characteristics such as the type of distribution of the noise *(e.g.,* Gaussian, uniform, etc.). In some examples, the synthesis parameters can be signaled in the bitstream. In some examples, the synthesis parameters can be conveyed via metadata. In some examples, the noise template 115 is used as a source for sampling noise patches to be overlaid on decoded images or video frames as a post-processing enhancement.

In various implementations, using the synthesis parameters, a decoder or post-processing system generates a two-dimensional grid (e.g., 64x64 pixels) filled with values that represent the noise pattern. In some examples, the two-dimensional grid can be generated by running a pseudo-random number generator or procedural algorithm seeded with the synthesis parameters. The pseudo-random number generator or procedural algorithm fills the two-dimensional grid with values that match the specified noise characteristics, thereby generating the noise template 115. In some examples, additional processing can be applied to the two-dimensional grid, such as filtering and/or shaping. The additional processing can be used to help ensure the noise template 115 has the selected texture and visual properties. The noise template 115 can be used as a reusable source for sampling noise patches, such as the sample region 120.

The sample region 120 is a selected sub-array of the noise template 115 corresponding to a sampling window (e.g., 32×32, 16×16, 8x8, etc.). In various implementations, the sample region 120 is determined by the hash function module 110 using a hash-based mapping technique. In particular, for each block of the decoded image to which texture is to be applied, a set of coordinates is selected for a selected sample region 120 of the noise template to use for the texture application. The sample region 120 can be identified by offsets (offset_x, offset_y) which identify, for example, a corner of the sample region 120. The offsets can be determined by the hash function module 110. Using the offsets, the sample region 120 can be applied to a corresponding image block in the decoded frame. The sample region 120 can be repositioned for each image block to promote spatial decorrelation and uniform coverage of the template space.

According to various implementations, the hash function module 110 can perform direct coordinate hashing and the hash function module 110 can perform linear index hashing. In direct coordinate hashing, the block coordinates identifying the block in the decoded image and a seed are hashed to determine the position of the sample region 120 in the noise template 115. In particular, the hash function module 110 implements direct-coordinate hashing in which a hash input is formed from the block coordinates (block_x, block_y), an optional seed, and preselected constants P1, P2, P3. A representative example maps to a valid window of width W, where: $W = TemplateSize - BlockSize + 1$

An index *idx* can be determined such that: $idx = \left(block_x\times P1+block_y\times P2+seed\times P3\right) mod \left(W\times W\right)$

Offsets identifying the sample region 120 can be determined using the index and the window size: $offset_x = idx mod W$ $offset_y = idx / W$

According to various examples, the hashed index determination does not utilize memory, and scales with any template and block size, thereby generating a reproducible position for the sample region 120 within the noise template 115.

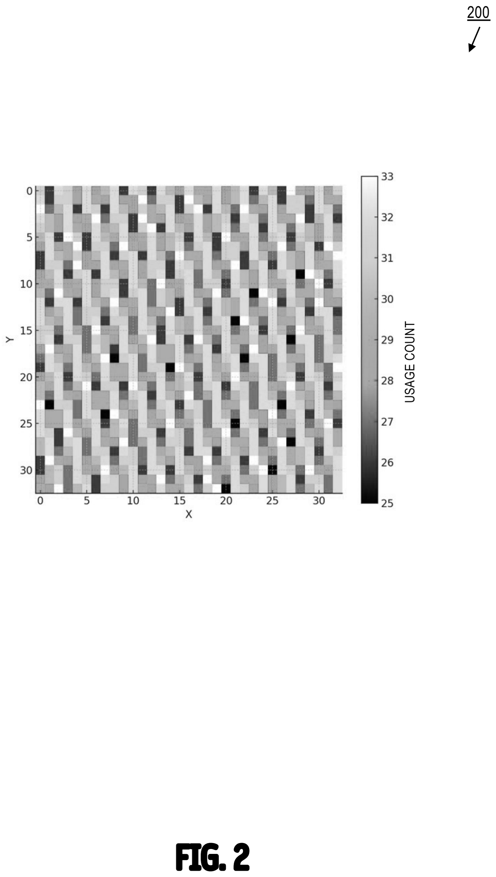

FIG. 2 is an example distribution plot 200 illustrating hashed index coordinate usage within a noise template based on direct coordinate hashing, according to various embodiments. In particular, FIG. 2 is a heatmap that illustrates how the direct coordinate hashing function selects coordinates for the sample region 120 (offset_x, offset_y) within the valid region of a noise template. Each cell in the distribution plot represents a possible coordinate (offset_x, offset_y) in the template. The intensity of each cell indicates how many times that position is selected during the sampling process across a large image or video frame. In particular, the bar on the right-hand side of FIG. 2 is a black-to-white intensity scale indicating the "usage count" of each region, ranging from a black-colored region having been used 25 times to a white-colored region having been used 33 times.

The distribution plot 200 demonstrates that the direct coordinate hashing function method achieves nearly uniform coverage of all valid positions. For example, there are no regions that are heavily overused or neglected-each possible coordinate is visited a similar number of times. The uniformity is a direct result of the direct coordinate hashing function, which mixes block coordinates and a seed with prime constants, then reduces the result modulo the number of valid positions, as described above. The method ensures that the sampling is unbiased and avoids the clustering or repetitive patterns seen in other methods. According to various examples, the distribution plot demonstrates that the direct coordinate hashing function leads to visually pleasing, artifact-free texture synthesis in video and image processing applications.

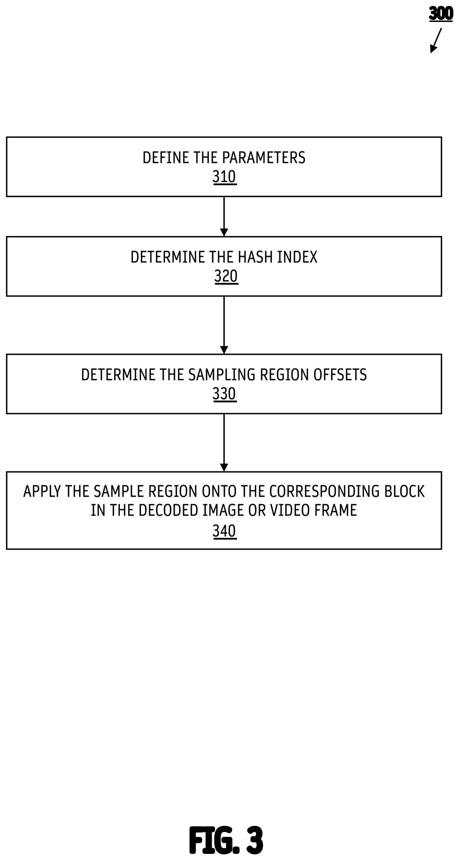

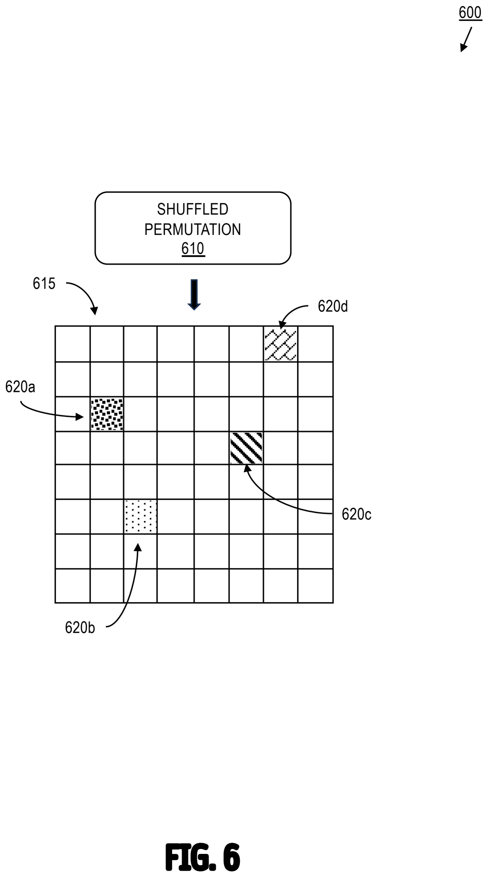

FIG. 3 is a flow chart illustrating an example method 300 generating sampling coordinates within a noise template using a direct coordinate hashing approach, in accordance with various embodiments. Although the method 300 is described with reference to the flowchart illustrated in FIG. 3, many other methods for direct coordinate hashing may alternatively be used. For example, the order of execution of the elements in FIG. 3 may be changed. As another example, some of the steps may be changed, eliminated, or combined. In various examples, the method 300 can be implemented by a system for texture synthesis, such as the systems of FIGS. 1 and 6.

At 310, the parameters used for coordinate generation are defined. The parameters can include the horizontal and vertical block coordinates within the decoded image or video frame, a seed value that may be updated per frame or scene, the block size (of the block within the decoded image or video frame), the noise template size, and a set of preselected constants. The template size and block size can be used to determine the valid range of sampling positions within the noise template, for example within the noise template 115 of FIG. 1. In various examples, the noise template size equals the block size.

At 320, the hash index is determined. The hash index is determined by combining the block coordinates, the seed, and the preselected constants using operations such as multiplication and addition. The result is reduced modulo the total number of valid positions in the template, as described herein, thereby producing a deterministic and well-distributed index value.

At 330, the sampling region offsets are determined. The hash index is mapped to two-dimensional offsets within the noise template (*e.g.,* offset_x, offset_y). In some examples, the resulting offsets specify the top-left coordinate of the sample region to be extracted from the noise template.

At 340, the sample region is extracted from the noise template and applied to the corresponding block in the decoded image or video frame. In some examples, the sample region can be overlaid on the corresponding block of the decoded frame. In some examples, the sample region can be blended with the corresponding block of the decoded frame. The sample region, for example sample region 120 of FIG. 1, is defined by the offsets and the block size. The sample region can be overlaid or blended with the target region in the decoded image or video frame to generate an output image or video frame, thereby synthesizing texture or film grain in a visually consistent and reproducible manner in the output.

Referring back to FIG. 1, for linear index hashing (also called block index hashing), at the hash function module 110, a row-major or sequential block index is hashed with the seed. In particular, a row-major block index is determined (e.g., block_index = block_y × blocks_per_row + block_x). In some examples, each block in the image is assigned a unique linear index (*i.e*., block_index). In linear index hashing, the block coordinates identifying the block in the decoded image and a seed are hashed to determine the position of the sample region 120 in the noise template 115. In particular, the hash function module 110 implements linear index hashing in which a hash input is formed from the block index, a seed, and preselected constants P, Q.

Using a window of width *W*, an index *idx* can be determined such that: $idx = \left(block_index\times P+seed\times Q\right) mod \left(W\times W\right)$

Offsets identifying the sample region 120 can be determined using the index and the window size: $offset_x = idx mod W$ $offset_y = idx / W$

According to various examples, for a 64×64 noise template and a 32×32 block region, the valid top-left offsets without wrap-around equal *W* = 33, yielding *W* × *W* = 1089 unique positions. In some examples, the hash function module 110 can be configured to traverse substantially all of these positions across an 8K decoded image frame while maintaining balanced usage and low deviation.

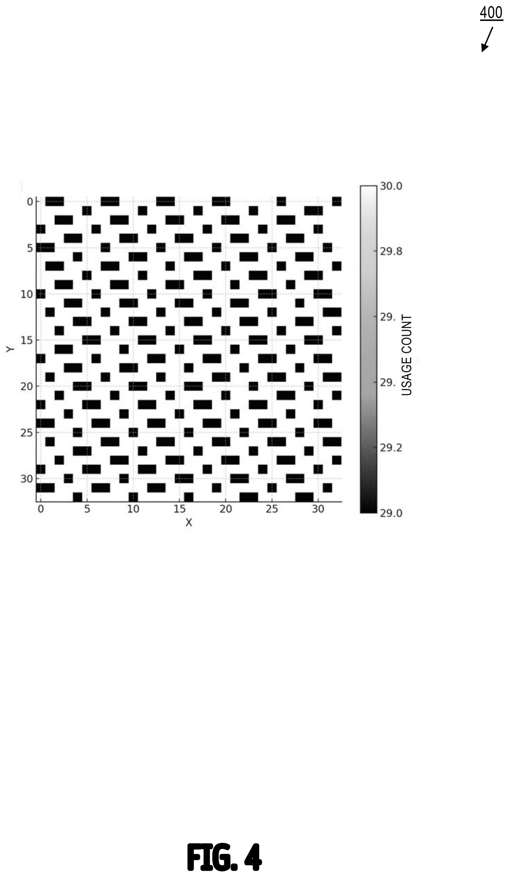

FIG. 4 is an example distribution plot 400 illustrating hashed index coordinate usage within a noise template based on linear index hashing, according to various embodiments. In particular,

FIG. 4 is a heatmap that illustrates how the linear index hashing function selects coordinates for the sample region 120 (offset_x, offset_y) within the valid region of a noise template. Each cell in the distribution plot represents a possible coordinate (offset_x, offset_y) in the template. The color of each cell indicates how many times that position is selected during the sampling process across a large image or video frame. In particular, the bar on the right-hand side of FIG. 4 is a black-to-white intensity scale indicating the "usage count" of each region, ranging from a black-colored region having been used 29 times to a white-colored region having been used 30 times. Since each region is used an integer number of times, each region is either black or white. The distribution plot demonstrates that the linear index hashing function distributes the sampling of coordinates so evenly that each valid position is used almost exactly the same number of times. Thus, the distribution plot 400 demonstrates that the linear index hashing function method achieves nearly uniform coverage of all valid positions. The uniformity is a direct result of the linear index hashing function.

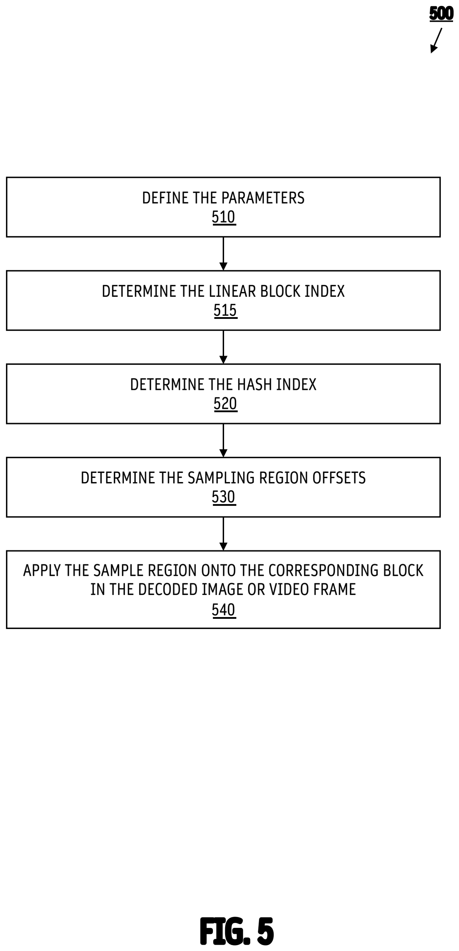

FIG. 5 is a flow chart illustrating an example method 500 for generating sampling coordinates within a noise template using a linear index hashing approach, in accordance with various embodiments. Although the method 500 is described with reference to the flowchart illustrated in FIG. 5, many other methods for direct coordinate hashing may alternatively be used. For example, the order of execution of the elements in FIG. 5 may be changed. As another example, some of the steps may be changed, eliminated, or combined. In various examples, the method 500 can be implemented by a system for texture synthesis, such as the systems of FIGS. 1 and 6.

At 510, the parameters used for coordinate generation are defined. The parameters can include the horizontal and vertical block coordinates within the decoded image or video frame, the block size (of the block within the decoded image or video frame), a count of the number of blocks per row, a seed value that may be varied per frame or scene, the noise template size, and a set of preselected constants used for mixing. The template size and block size can be used to determine the valid range of sampling positions within the noise template, for example within the noise template 115 of FIG. 1

At 515, the two-dimensional block location in the decoded image or video frame is converted into a single row-major identifier. In one example, a linear index is determined according to block_index = block_y × blocks_per_row + block_x. In some examples, using the linear index consolidates spatial identifiers into a compact domain that is convenient for hashing and avoids axis-wise state reuse.

At 520, the linear block index is mixed with a seed. In some examples, arithmetic operations and constants are used for the mixing, and produce a bounded index for valid positions in the template. In one embodiment, the computation is expressed as idx = (block_index × *P +* seed × *Q*) *mod* (*W* × *W*), where Pand *Q* are constants selected to promote dispersion and reduce correlation. In some examples, the modulo reduction confines the result to the count of valid top-left positions.

At 530, the hash index is mapped to two-dimensional offsets within the template window. In some implementations, the offsets are determined using offset_x = idx *mod W* and $offset_y = \left⌊idx/W\right⌋$ . In some examples, the offset pair (offset_x, offset_y) specifies the top-left coordinate of a sample region whose size equals the block dimension.

At 540, the sample region is extracted from the noise template beginning at the determined offsets and applied to the corresponding block of the decoded frame. In some examples, the sample region can be overlaid on the corresponding block of the decoded frame. In some examples, the sample region can be blended with the corresponding block of the decoded frame. The sample region, for example sample region 120 of FIG. 1, is defined by the offsets and the block size. The sample region can be overlaid or blended with the target region in the decoded image or video frame to generate an output image or video frame, thereby synthesizing texture or film grain in a visually consistent and reproducible manner in the output.

In some examples, the offsets can be limited to even positions to maintain alignment with chroma subsampling, as practiced in some video coding formats such as AV1 and AV2. In some examples, the offsets can include odd positions to improve decorrelation and visual uniformity. The hash function module 110 can accept an encoder-selected seed per frame or scene cut, enabling pattern reuse for static scenes and seed refresh for changing lighting conditions.

According to various examples, the hash-based mapping performed by the hash function module 110 selects positions in the noise template that do not reuse the same random values for both the X and Y directions. Instead, the hash function module 110 uses a method (described above) that generates each coordinate in a way that is both predictable and spreads the sampling points evenly across the whole template. The methods provided avoid visible patterns and ensure that each area of the template is used fairly. In contrast, conventional 8-bit LFSR schemes introduce spatial correlation, limit entropy (e.g., 256 values), and yield imbalanced coverage and visible patterns.

In some implementations, in direct-coordinate hashing or linear index hashing, the mapping from the block coordinates and seed to the offsets for the sample region 120 can be deterministic, allowing for frame-level reproducibility across devices and runs. In some examples, the hash function module 110 can remain fully stateless for hash-based mapping, avoiding a ROM/SRAM list while maintaining balanced distribution properties.

According to various implementations, the hash function module 110 can adapt to different block sizes, template dimensions, and seed strategies. In some implementations, the hash function module 110 can select prime constants and modulus sizes to tune dispersion and uniformity. In some examples, parallel coordinate streams can be determined per processing tile or thread, sustaining real-time throughput for high-resolution content.

According to various implementations, by utilizing the hash-based mapping strategies described above, the system 100 of FIG. 1 can produce complete and balanced utilization of the template space, minimize sampling bias and structured artifacts, and maintain hardware efficiency. In some examples, wrap-around seam blending can be utilized and/or chroma-alignment constraints can be relaxed, as described below, thereby increasing spatial variance and perceptual realism without affecting determinism or implementation simplicity.

### Example Shuffled Permutation Sampling Method

FIG. 6 is a block diagram illustrating an example system 600 for shuffled permutation sampling to select a region from a noise template to use for texture synthesis for a block of an image, in accordance with various embodiments. The system 600 includes a shuffled permutation module 610, a noise template 615, and a plurality of sample regions 620a, 620b, 620c, and 620d. As shown in FIG. 6, the noise template 615 includes many sample regions 620 (*e.g.,* each box in the noise template 615 is a sample region 620), and for purposes of illustration, four of the sample regions 620 are labeled as sample regions 620a-620d. In various examples, the shuffled permutation module selects sample regions 620 from the noise template 615 in a manner that ensures complete, unbiased, and reproducible coverage of the template space. In particular, the shuffled permutation module 610 generates a randomized list of valid sampling positions (*i.e.,* sample region coordinates) within a noise template 615. In a decoded video frame or image, each block to which texture synthesis is to be applied is assigned a unique position from the shuffled list, thereby ensuring that the sample regions 620 are utilized before any position is reused.

The shuffled permutation module 610 can include logic or circuitry configured to generate a shuffled list of valid coordinates within the noise template 615. In some examples, the shuffled permutation module 610 utilizes a seeded pseudo-random number generator or equivalent deterministic process. The shuffled permutation module 610 can be implemented in hardware, software, or a combination thereof.

The noise template 615 includes a two-dimensional array of values representing a spatial noise pattern. The noise template 615 can be generated using parameters signaled in the bitstream or derived from metadata, and can be sized to accommodate a variety of block dimensions and template sizes. The noise template 615 serves as the source from which sample regions 620 are extracted and applied to decoded images or video frames. The noise template 615 can be substantially the same as the noise template 115 described above.

The sample regions 620a, 620b, 620c, and 620d each comprise a sub-array of the noise template 615, corresponding to a block of predetermined size (e.g., 16×16 or 32×32 pixels). Each sample region 620 is positioned within the noise template 615 according to the ordering produced by the shuffled permutation module 610. The sample regions 620a, 620b, 620c, and 620d can be selected such that no two regions overlap until the valid positions (*e.g.,* each of the sample regions 620) have been used, thereby ensuring uniform coverage.

In some implementations, the shuffled permutation module 610 can include a preprocessing step in which the valid coordinates within the noise template 615 are enumerated and then shuffled using a seeded randomization algorithm. The resulting list is stored in a lookup table or equivalent memory structure, allowing for efficient retrieval of coordinates during runtime. At runtime, for each block to be synthesized, the system retrieves the next coordinate from the shuffled list generated by the shuffled permutation module 610. The corresponding sample region (*e.g.,* sample region 620a) is then extracted from the noise template 615 and applied to the respective block in the decoded target image or video frame. The process is repeated for each block, cycling through the shuffled list until all positions have been used. Once the positions have been used, the list may be reshuffled or reused as needed.

In some examples, the shuffled list of sample regions 620 is applied to blocks of the decoded target image or video frame in a raster scan order. In some examples, the shuffled list of sample regions 620 is applied to blocks of the decoded target image or video frame in a tiled order. The randomized ordering of sample regions ensures that the resulting texture appears natural and free from structured artifacts.

In some examples, the sample regions 620, including the sample regions 620a, 620b, 620c, and 620d, can include non-overlapping blocks that collectively cover the valid region of the noise template 615. The use of a shuffled permutation ensures that the spatial distribution of sample regions is randomized, thereby minimizing the risk of visible patterns or artifacts in the synthesized texture.

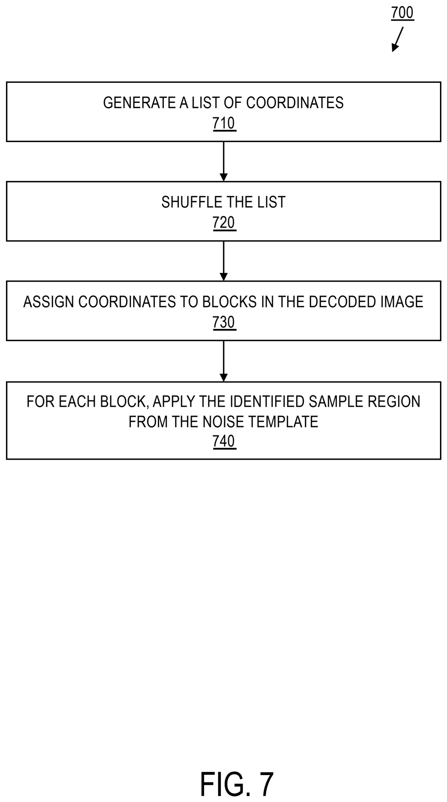

FIG. 7 is a flow chart illustrating an example method 700 for shuffled permutation sampling, in accordance with various embodiments. Although the method 700 is described with reference to the flowchart illustrated in FIG. 7, many other methods for shuffled permutation sampling may alternatively be used. For example, the order of execution of the elements in FIG. 7 may be changed. As another example, some of the steps may be changed, eliminated, or combined. In various examples, the method 700 can be implemented by a system for texture synthesis, such as the systems of FIGS. 1 and 6.

At 710, a list of coordinates is generated. In some examples, the list includes a list of all valid top-left coordinates (x, y) for placing a sample region of size *B* within a noise template of size *T.* In some examples, for a template of size *T* × *T* and sample region of size *B* × *B,* the valid range for each axis is: $W = T - B + 1$

Thus, using this equation, the valid top-left coordinates (x,y) for placing a sample region include any *x* coordinate from zero to *W-1,* and any y coordinate from zero to *W-1.*

At 720, the list of coordinates is shuffled. In some examples, the list of valid coordinates is shuffled using a seeded pseudo-random number generator (PRNG). In some examples, using a PRNG allows for reproducibility of the shuffled order. The shuffled list generated at 720 can be represented as $Shuffled _ coordinates = shuffle \left(valid_coordinates, seed\right)$

At 730, shuffled coordinates are assigned to blocks in the decoded image. In particular, blocks in the decoded image can be indexed by *block*_*index.* For each block in the image, a coordinate set is assigned from the shuffled list. If there are more blocks than valid coordinate positions, wrap around can be performed using a modulo. In particular, after all the valid coordinate positions once have been used once, the coordinate position list can be used again from the beginning of the shuffled list: $index = block_index mod \left(W\times W\right)$ $\left({offset}_{x}, {offset}_{y}\right) = shuffled _ coordinates \left[index\right]$ where *W* × *W* are the total number of positions.

At 740, for each block, the identified sample region from the noise template corresponding to the selected block is applied to the block.

In some examples, the shuffled permutation sampling method is deterministic, such that the same seed and parameters will produce the same ordering of sample regions. This property can be advantageous for reproducibility and debugging, as well as for compliance with standards for consistent noise synthesis across devices.

In some examples, the shuffled list can be generated once per frame or once per scene, and the shuffled list can be stored in a small memory. The runtime logic for retrieving coordinates and extracting sample regions is simple and efficient. Thus, the shuffled permutation technique can be used for real-time video processing pipelines.

In various implementations, the noise template 615 can be configured to support wrap-around systems and methods, as described below, allowing sample regions to traverse template boundaries seamlessly. Including the wrap-around extension further enhances spatial diversity and eliminates edge bias, particularly in cases where the block size is large relative to the template size.

In various implementations, the shuffled permutation module 610 can be adapted to accommodate various template and block sizes, as well as different noise models and synthesis parameters. Thus, the shuffled permutation method is applicable to a wide range of video and image processing scenarios.

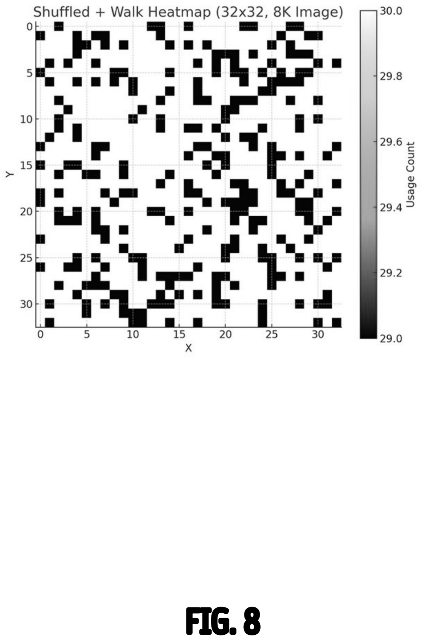

FIG. 8 is an example distribution plot 800 illustrating shuffled permutation sampling usage within a noise template, according to various embodiments. In particular, FIG. 8 is a heatmap that illustrates the distribution of sampling positions within a noise template when using the shuffled permutation sampling method. Each cell in the distribution plot represents a valid top-left coordinate (offset_x, offset_y) for block sampling within a noise template. The color of each cell indicates how many times that position is selected during the sampling process across a large image or video frame. Thus, the heatmap shows how evenly the shuffled permutation method covers the template space during noise synthesis.

In particular, the bar on the right-hand side of FIG. 8 is a black-to-white intensity scale indicating the "usage count" of each region, ranging from a black-colored region having been used 29 times to a white-colored region having been used 30 times. Since each region is used an integer number of times, each region is either black or white. The distribution plot demonstrates that the shuffled permutation sampling method distributes the sampling of coordinates so evenly that each valid position is used almost exactly the same number of times. Thus, the distribution plot 800 demonstrates that the shuffled permutation sampling method achieves nearly uniform coverage of all valid positions.

### Example Wrap-Around System

The wrap-around system provides an enhancement to coordinate generation strategies for noise template sampling. In particular, the wrap-around system treats the noise template as a toroidal space to enable seamless sampling across noise template boundaries. Without the wrap-around system, the valid top-left positions for a sample region of size *N* × *N* within a noise template of size *T* × *T* are limited to those positions where the region is fully contained within the noise template, resulting in *(T - N +* 1) × (*T - N* + 1) possible placements. This can lead to underutilization of the noise template and the introduction of edge bias, which can manifest as visible artifacts in the synthesized texture.

The wrap-around system permits the sample region to originate at any coordinate within the noise template, including those near the boundaries. When a portion of the sample region extends beyond the noise template edge, the system wraps the out-of-bounds portion to the opposite side of the noise template, thereby emulating a toroidal topology. In some examples, the wrapped coordinates for each pixel in the sample region are determined using modular arithmetic, such that for a noise template of size *T,* the horizontal and vertical coordinates are given by: $template_x = \left(offset_x+i\right) modT$ $template_y = \left(offset_y+j\right) modT$ where (offset_x, offset_y) denotes the top-left coordinate of the sample region and *i*, *j* are pixel offsets within the region.

By employing the wrap-around system, the number of valid starting positions is increased to *T* × *T,* thereby maximizing noise template utilization and allowing for all regions of the noise template to be accessible for sampling. In some examples, the modulo operation used for wrap-around can be efficiently realized using bit masking when the noise template dimension is a power of two. In some examples, the number of sample regions to be synthesized exceeds the number of non-wrapped valid positions, and the wrap-around system allows for a balanced and repeated use of noise template regions without bias toward the center or edges.

In one example, in a 64x64 noise template, when the sample regions are 32x32 pixel sample blocks, using the wrap-around system allows for use of all 4096 top-left positions. In contrast, without the wrap-around system, the subset of positions for the sample region that are fully contained within the noise template are 33x33=1089 potential sample positions.

The wrap-around system may be integrated with and of the methods described herein, including hash-based mapping and shuffled permutation sampling methods. In various implementations, the coordinate generation logic generates initial offsets, and, by applying modular reduction, the wrap-around technique ensures that when a pixel or coordinate is read from the noise template, the pixel and/or coordinate is within the noise template bounds. In some examples, the system may incorporate blending or smoothing at the wrap seam to suppress any residual artifacts that might arise from the toroidal mapping.

In some implementations, the wrap-around system can be valuable for high-resolution or high-frequency texture synthesis. In particular, the wrap-around system prevents the formation of visible seams and abrupt changes at template boundaries. According to various examples, the wrap-around system supports deterministic, stateless implementations and is suitable for both hardware and software pipelines, thereby providing a robust and flexible solution for high-quality, artifact-free noise or texture synthesis.

### Example Analysis of Methods for Coordinate Generation

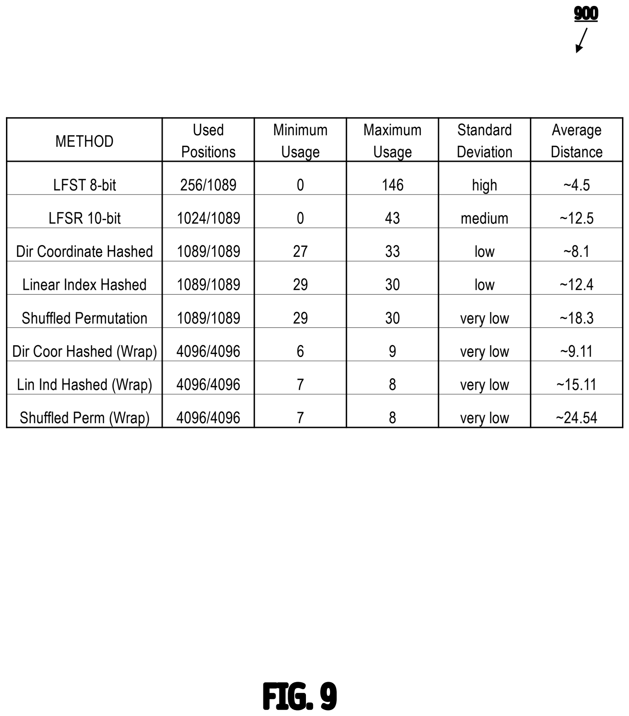

FIG. 9 illustrates a table 900, which presents a comparative analysis of multiple coordinate generation methods for noise sampling within a spatial template, as evaluated over an 8K frame, in accordance with various embodiments. The table 900 includes a plurality of rows, each corresponding to a distinct coordinate generation method, and a plurality of columns, each indicating a performance metric. The columns of table 900 include: Method, Used Positions, Minimum Usage, Maximum Usage, Standard Deviation, and Average Distance.

The method column enumerates the coordinate generation methods analyzed, including: LFST 8-bit, LFSR 10-bit, Direct Coordinate Hashed, Linear Index Hashed, Shuffled Permutation, and the respective wrap-around variants of Direct Coordinate Hashed, Linear Index Hashed, Shuffled Permutation. The Used Positions column specifies the ratio of unique template positions accessed to the total number of valid positions for each method. The Minimum Usage and Maximum Usage columns indicate, respectively, the lowest and highest number of times any template position is sampled during the simulation. The Standard Deviation column provides a qualitative or quantitative assessment of the variability in usage counts across all positions. The Average Distance column reports the mean spatial distance between consecutive samples, serving as an indicator of sampling dispersion.

The first row of table 900 corresponds to the LFST 8-bit method, which utilizes a linear feedback shift register with 8-bit precision. This method accesses 256 out of 1089 possible positions, resulting in a minimum usage of zero and a maximum usage of 146. The standard deviation is characterized as "high," and the average distance between samples is approximately 4.5. These results indicate that the LFST 8-bit method exhibits substantial clustering and uneven coverage, with many positions unused and others heavily oversampled.

The second row presents the LFSR 10-bit method, which increases the register width to ten bits. This enhancement yields 1024 used positions out of 1089, with a minimum usage of zero and a maximum usage of 43. The standard deviation is "medium," and the average distance is approximately 12.5. While the LFSR 10-bit method improves coverage and reduces clustering relative to the 8-bit variant, it still fails to achieve full template utilization and exhibits moderate variability in usage.

The third and fourth rows correspond to hash-based mapping strategies: Direct Coordinate Hashed and Linear Index Hashed, as provided herein. Both methods achieve complete coverage, utilizing all 1089 valid positions. The minimum and maximum usage counts are tightly bounded (27-33 and 27-32, respectively), and the standard deviation is "low." The average distances are approximately 8.1 and 12.4, respectively. These results demonstrate that hash-based methods provide uniform sampling with minimal deviation, effectively eliminating unused positions and reducing oversampling.

The fifth row details the Shuffled Permutation method as provided herein, which also achieves full coverage (1089/1089), with minimum and maximum usage counts of 29 and 30, respectively. The standard deviation is "very low," and the average distance is approximately 18.3. This method yields the most balanced distribution among the non-wrap-around strategies, with nearly identical usage counts for all positions and the highest average spatial dispersion.

The last three rows of table 900 pertain to methods employing the wrap-around system, wherein the template is treated as a toroidal space to maximize usable positions. The Direct Coordinate Hashed (Wrap) method accesses all 4096 positions, with usage counts ranging from 6 to 9, a "very low" standard deviation, and an average distance of approximately 9.11. The Linear Index Hashed (Wrap) method also achieves complete coverage (4096/4096), with usage counts between 7 and 8, a "very low" standard deviation, and an average distance of approximately 15.11. The Shuffled Permutation (Wrap) method matches this coverage and uniformity, with usage counts of 7 and 8, a "very low" standard deviation, and the highest average distance of approximately 24.54.

In summary, table 900 demonstrates that the systems and methods provided herein, particularly when combined with wrap-around sampling, achieve superior coverage, uniformity, and spatial dispersion compared to traditional LFSR-based approaches. The wrap-around variants further enhance performance by eliminating edge bias and enabling seamless, balanced sampling across the entire template. These results demonstrate the efficacy of the disclosed coordinate generation strategies for reproducible texture synthesis and noise sampling in visual media applications.

### Example Computing Device

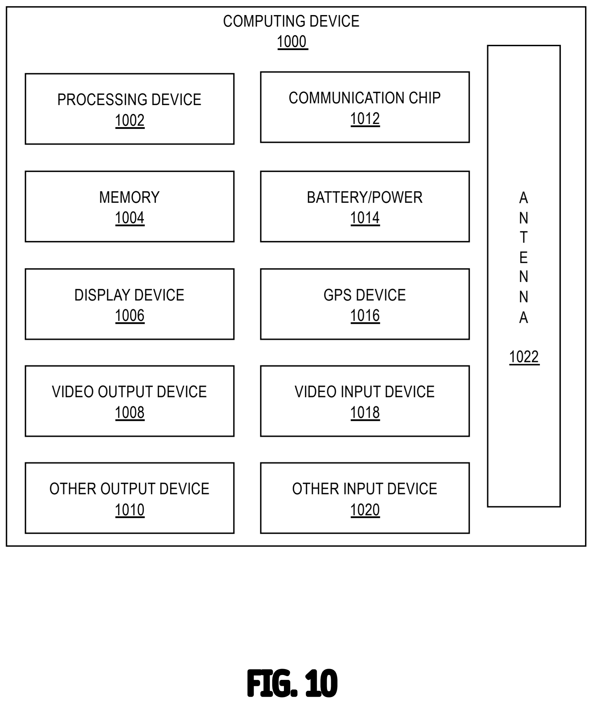

FIG. 10 is a block diagram of an example computing device 1000, in accordance with various embodiments. In some embodiments, the computing device 1000 can be used as at least part of the systems discussed herein. A number of components are illustrated in FIG. 10 as included in the computing device 1000, but any one or more of these components may be omitted or duplicated, as suitable for the application. In some embodiments, the computing device 1000 includes a hash function module, a shuffled permutation module, a texture synthesis module, and/or any other components discussed herein. In some embodiments, some or all of the components included in the computing device 1000 may be attached to one or more motherboards. In some embodiments, some or all of these components are fabricated onto a single system on a chip (SoC) die. Additionally, in various embodiments, the computing device 1000 may not include one or more of the components illustrated in FIG. 10, but the computing device 1000 may include interface circuitry for coupling to the one or more components. For example, the computing device 1000 may not include a display device 1006, but may include display device interface circuitry (e.g., a connector and driver circuitry) to which a display device 1006 may be coupled. In another set of examples, the computing device 1000 may not include an audio input device 1018 or an audio output device 1008, but may include audio input or output device interface circuitry (e.g., connectors and supporting circuitry) to which an audio input device 1018 or audio output device 1008 may be coupled.

The computing device 1000 may include a processing device 1002 (e.g., one or more processing devices). The processing device 1002 processes electronic data from registers and/or memory to transform that electronic data into other electronic data that may be stored in registers and/or memory. The computing device 1000 may include a memory 1004, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 1004 may include memory that shares a die with the processing device 1002. In some embodiments, the memory 1004 includes one or more non-transitory computer-readable media storing instructions executable to perform deep learning operations, e.g., the methods described above. The instructions stored in the one or more non-transitory computer-readable media may be executed by the processing device 1002.

In some embodiments, the computing device 1000 may include a communication chip 1012 (e.g., one or more communication chips). For example, the communication chip 1012 may be configured for managing wireless communications for the transfer of data to and from the computing device 1000. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not.

The communication chip 1012 may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 1012 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 1012 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 1012 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 1012 may operate in accordance with other wireless protocols in other embodiments. The computing device 1000 may include an antenna 1022 to facilitate wireless communications and/or to receive other wireless communications (such as AM or FM radio transmissions).

In some embodiments, the communication chip 1012 may manage wired communications, such as electrical, optical, or any other suitable communication protocols (e.g., the Ethernet). As noted above, the communication chip 1012 may include multiple communication chips. For instance, a first communication chip 1012 may be dedicated to shorter-range wireless communications such as Wi-Fi or Bluetooth, and a second communication chip 1012 may be dedicated to longer-range wireless communications such as global positioning system (GPS), EDGE, GPRS, CDMA, WiMAX, LTE, EV-DO, or others. In some embodiments, a first communication chip 1012 may be dedicated to wireless communications, and a second communication chip 1012 may be dedicated to wired communications.

The computing device 1000 may include battery/power circuitry 1014. The battery/power circuitry 1014 may include one or more energy storage devices (e.g., batteries or capacitors) and/or circuitry for coupling components of the computing device 1000 to an energy source separate from the computing device 1000 (e.g., AC line power).

The computing device 1000 may include a display device 1006 (or corresponding interface circuitry, as discussed above). The display device 1006 may include any visual indicators, such as a heads-up display, a computer monitor, a projector, a touchscreen display, a liquid crystal display (LCD), a light-emitting diode display, or a flat panel display, for example.

The computing device 1000 may include an audio output device 1008 (or corresponding interface circuitry, as discussed above). The audio output device 1008 may include any device that generates an audible indicator, such as speakers, headsets, or earbuds, for example.

The computing device 1000 may include an audio input device 1018 (or corresponding interface circuitry, as discussed above). The audio input device 1018 may include any device that generates a signal representative of a sound, such as microphones, microphone arrays, or digital instruments (e.g., instruments having a musical instrument digital interface (MIDI) output).

The computing device 1000 may include a GPS device 1016 (or corresponding interface circuitry, as discussed above). The GPS device 1016 may be in communication with a satellite-based system and may receive a location of the computing device 1000, as known in the art.

The computing device 1000 may include another output device 1010 (or corresponding interface circuitry, as discussed above). Examples of the other output device 1010 may include an audio codec, a video codec, a printer, a wired or wireless transmitter for providing information to other devices, or an additional storage device.

The computing device 1000 may include another input device 1020 (or corresponding interface circuitry, as discussed above). Examples of the other input device 1020 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1000 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 1000 may be any other electronic device that processes data.

### Selected examples

The following paragraphs provide various examples of the embodiments disclosed herein.

Example 1 provides an apparatus, including a computer processor for executing computer program instructions; and a non-transitory computer-readable memory storing computer program instructions executable by the computer processor to perform operations including receiving a decoded image frame including a plurality of blocks; for each of the plurality of blocks, determining a sample region in a noise template, including: defining parameters for sample region determination, including block coordinates for the respective block, a seed value and a preselected constant; determining a hash index based on the block coordinates, the seed value, and the preselected constant; mapping the hash index to offsets within the noise template, including an x-offset defining an x-coordinate for the sample region in the noise template and a y-offset defining a y-coordinate for the sample region in the noise template; applying the sample region to the respective block of the plurality of blocks to synthesis texture to the respective block.

Example 2 provides the apparatus of example 1, the operations further including determining a linear index for the block coordinates based on a number of blocks per row in the decoded image frame.

Example 3 provides the apparatus of example 2, where determining the linear index includes determining a product of a row index and the number of blocks per row, added to a column index of the block.

Example 4 provides the apparatus of example 2 or 3, where determining the hash index based on the block coordinates includes determining the hash index based on the linear index for the block coordinates.

Example 5 provides the apparatus of any one of examples 1-4, where mapping the hash index to offsets within the noise template includes determining the x-offset as a modulus of the hash index and a valid window width; and determining the y-offset as an integer division of the hash index by the valid window width.

Example 6 provides the apparatus of any one of examples 1-5, where the offsets can map to any coordinate within the noise template.

Example 7 provides the apparatus of example 6, where, when a portion of the sample region extends beyond an edge of the noise template, the portion is wrapped around to an opposite side of the noise template.

Example 8 provides the apparatus of any one of examples 1-7, where the noise template is generated based on synthesis parameters, where the synthesis parameters are at least one of: signaled in a video bitstream, and conveyed via metadata.

Example 9 provides the apparatus of any one of examples 1-8, where the preselected constant includes a prime number.

Example 10 provides the apparatus of any one of examples 1-9, where the seed value is updated for each frame or scene of the decoded image frame.

Example 11 provides one or more non-transitory computer-readable media storing instructions executable to perform operations, the operations including receiving a decoded image frame including a plurality of blocks; for each of the plurality of blocks, determining a sample region in a noise template, including: defining parameters for sample region determination, including block coordinates for the respective block, a seed value and a preselected constant; determining a hash index based on the block coordinates, the seed value, and the preselected constant; mapping the hash index to offsets within the noise template, including an x-offset defining an x-coordinate for the sample region in the noise template and a y-offset defining a y-coordinate for the sample region in the noise template; applying the sample region to the respective block of the plurality of blocks to synthesis texture to the respective block.

Example 12 provides the one or more non-transitory computer-readable media of example 11, the operations further including determining a linear index for the block coordinates based on a number of blocks per row in the decoded image frame.

Example 13 provides the one or more non-transitory computer-readable media of example 12, where determining the linear index includes determining a product of a row index and the number of blocks per row, added to a column index of the block.

Example 14 provides the one or more non-transitory computer-readable media of example 12 or 13, where determining the hash index based on the block coordinates includes determining the hash index based on the linear index for the block coordinates.

Example 15 provides the one or more non-transitory computer-readable media of any one of examples 11-14, where mapping the hash index to offsets within the noise template includes determining the x-offset as a modulus of the hash index and a valid window width; and determining the y-offset as an integer division of the hash index by the valid window width.

Example 16 provides the one or more non-transitory computer-readable media of any one of examples 11-15, where the offsets can map to any coordinate within the noise template.

Example 17 provides the one or more non-transitory computer-readable media of example 16, where, when a portion of the sample region extends beyond an edge of the noise template, the portion is wrapped around to an opposite side of the noise template.

Example 18 provides the one or more non-transitory computer-readable media of any one of examples 11-17, where the noise template is generated based on synthesis parameters, where the synthesis parameters are at least one of: signaled in a video bitstream, and conveyed via metadata.

Example 19 provides the one or more non-transitory computer-readable media of any one of examples 11-18, where the preselected constant includes a prime number.

Example 20 provides the one or more non-transitory computer-readable media of any one of examples 11-19, where the seed value is updated for each frame or scene of the decoded image frame.

Example 21 provides a computer-implemented method, including receiving a decoded image frame including a plurality of blocks; for each of the plurality of blocks, determining a sample region in a noise template, including: defining parameters for sample region determination, including block coordinates for the respective block, a seed value and a preselected constant; determining a hash index based on the block coordinates, the seed value, and the preselected constant; mapping the hash index to offsets within the noise template, including an x-offset defining an x-coordinate for the sample region in the noise template and a y-offset defining a y-coordinate for the sample region in the noise template; applying the sample region to the respective block of the plurality of blocks to synthesis texture to the respective block.

Example 22 provides the computer-implemented method of example 21, the operations further including determining a linear index for the block coordinates based on a number of blocks per row in the decoded image frame.

Example 24 provides the computer-implemented method of example 22, where determining the linear index includes determining a product of a row index and the number of blocks per row, added to a column index of the block.

Example 25 provides the computer-implemented method of any one of examples 22-24, where determining the hash index based on the block coordinates includes determining the hash index based on the linear index for the block coordinates.

Example 26 provides the computer-implemented method of any one of examples 21-25, where mapping the hash index to offsets within the noise template includes determining the x-offset as a modulus of the hash index and a valid window width; and determining the y-offset as an integer division of the hash index by the valid window width.

Example 27 provides the computer-implemented method of any one of examples 21-26, where the offsets can map to any coordinate within the noise template.

Example 28 provides the computer-implemented method of example 27, where, when a portion of the sample region extends beyond an edge of the noise template, the portion is wrapped around to an opposite side of the noise template.

Example 29 provides the computer-implemented method of any one of examples 21-28, where the noise template is generated based on synthesis parameters, where the synthesis parameters are at least one of: signaled in a video bitstream, and conveyed via metadata.

Example 30 provides the computer-implemented method of any one of examples 21-29, where the preselected constant includes a prime number.

Example 31 provides the computer-implemented method of any one of examples 21-30, where the seed value is updated for each frame or scene of the decoded image.

Example 32 provides an apparatus including a computer processor for executing computer program instructions; and a non-transitory computer-readable memory storing computer program instructions executable by the computer processor to perform operations including receiving a decoded image frame including a plurality of blocks; generating a list of coordinates for sample regions within a noise template; shuffling the list of coordinates using a seeded pseudo-random number generator to produce a shuffled list; for each block of the plurality of blocks, assigning coordinates from the shuffled list to the block; extracting a selected sample region from the noise template at the assigned coordinates; and applying the selected sample region to the respective block to synthesize texture in the decoded image frame.

Example 33 provides the apparatus of example 32, wherein the list of coordinates includes (x,y) coordinate pairs, wherein each (x,y) coordinate pair indicates a top-left corner of a respective sample region, and wherein the (x,y) coordinate pairs can map to any area of the noise template.

Example 34 provides the apparatus of example 33, wherein, when a portion of the respective sample region extends beyond an edge of the noise template, the portion is wrapped around to an opposite side of the noise template.

Example 35 provides the apparatus of example 32, wherein the seeded pseudo-random number generator is configured to produce a reproducible shuffled list for a given seed value.

Example 36 provides the apparatus of example 32, wherein the shuffled list is stored in a lookup table in the memory.

Example 37 provides the apparatus of example 32, wherein, after all coordinates in the shuffled list have been assigned to blocks, the shuffled list is one of: reused for subsequent blocks, and reshuffled for subsequent blocks.

Example 38 provides the apparatus of example 32, wherein the assignment of coordinates from the shuffled list to blocks is performed in one of a raster scan order and/or a tiled order.

Example 39 provides the apparatus of example 32, wherein the list of coordinates comprises all valid top-left positions for sample regions of a predetermined size within the noise template.

Example 40 provides the apparatus of example 32, wherein the shuffled permutation sampling method is compatible with wrap-around addressing of the noise template.

Example 41 provides the apparatus of example 32, wherein the noise template is treated as a toroidal space, such that when a portion of the sample region extends beyond a boundary of the noise template, the portion is wrapped around to the opposite side of the noise template.

Example 42 provides the apparatus of example 32, wherein the apparatus is further configured to blend or smooth at the wrap seam to suppress artifacts resulting from the toroidal mapping.

Example 43 provides the apparatus of example 32, wherein the shuffled list is generated once per frame or periodically refreshed for each scene.

Example 44 provides the apparatus of example 32, wherein the assignment of sample regions to blocks is performed such that each block is assigned a unique coordinate from the shuffled list before any coordinate is reused.

Example 45 provides a computer-implemented method, comprising generating a list of coordinates that includes (x, y) coordinate pairs, wherein each (x, y) coordinate pair indicates a top-left corner of a respective sample region, and wherein the (x, y) coordinate pairs can map to any area of the noise template.

Example 46 provides the computer-implemented method of example 45, wherein, when a portion of the respective sample region extends beyond an edge of the noise template, the portion is wrapped around to an opposite side of the noise template.

Example 47 provides the computer-implemented method of example 45, further comprising using a seeded pseudo-random number generator configured to produce a reproducible shuffled list for a given seed value.

Example 48 provides the computer-implemented method of example 45, further comprising storing the shuffled list in a lookup table in a memory.

Example 49 provides the computer-implemented method of example 45, further comprising, after all coordinates in the shuffled list have been assigned to blocks, reusing or reshuffling the shuffled list for subsequent blocks.

Example 50 provides the computer-implemented method of example 45, wherein the assignment of coordinates from the shuffled list to blocks is performed in one of a raster scan order and/or a tiled order.

Example 51 provides the computer-implemented method of example 45, wherein the list of coordinates comprises all valid top-left positions for sample regions of a predetermined size within the noise template.

Example 52 provides the computer-implemented method of example 45, wherein the shuffled permutation sampling method is compatible with wrap-around addressing of the noise template.

Example 53 provides the computer-implemented method of example 45, wherein the noise template is treated as a toroidal space, such that when a portion of the sample region extends beyond a boundary of the noise template, the portion is wrapped around to the opposite side of the noise template.

Example 54 provides the computer-implemented method of example 45, further comprising blending or smoothing at the wrap seam to suppress artifacts resulting from the toroidal mapping.

Example 55 provides the computer-implemented method of example 45, wherein the shuffled list is generated once per frame or periodically refreshed for each scene.

Example 56 provides the computer-implemented method of example 45, wherein the assignment of sample regions to blocks is performed such that each block is assigned a unique coordinate from the shuffled list before any coordinate is reused.

Example A provides a computer program product comprising instructions, that when executed by a processor, causes the processor to perform a method of any one of examples 21-31 and 45-56.

Example B provides an apparatus comprising means for performing a method of any one of examples 21-31 and 45-56.

Example C provides one or more components of a texture syntheses system as described and illustrated herein.

Example D provides a processor having one or more processing cores for texture synthesis, the one or more processing cores implementing one or more operations for coordinate generation for texture synthesis of a region of an image as described and illustrated herein.

### Variations and other notes

Although the operations of the example methods shown in and described with reference to FIGS. 3, 5, and 7 are illustrated as occurring once each and in a particular order, it will be recognized that some operations may be performed in any suitable order and repeated as desired. Furthermore, the operations illustrated in FIGS. 3, 5, and 7 or other FIGS. may be combined or may include more or fewer details than described.

The various implementations described herein may refer to artificial intelligence, machine learning, and deep learning. Deep learning may be a subset of machine learning. Machine learning may be a subset of artificial intelligence. In cases where a deep learning model is mentioned, if suitable for a particular application, a machine learning model may be used instead. In cases where a deep learning model is mentioned, if suitable for a particular application, a digital signal processing system may be used instead.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

For the purposes of the present disclosure, "A is less than or equal to a first threshold" is equivalent to "A is less than a second threshold" provided that the first threshold and the second thresholds are set in a manner so that both statements result in the same logical outcome for any value of A. For the purposes of the present disclosure, "B is greater than a first threshold" is equivalent to "B is greater than or equal to a second threshold" provided that the first threshold and the second thresholds are set in a manner so that both statements result in the same logical outcome for any value of B.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

## Claims

1. An apparatus, comprising:
a computer processor for executing computer program instructions; and
a non-transitory computer-readable memory storing computer program instructions executable by the computer processor to perform operations comprising:
receiving a decoded image frame including a plurality of blocks;
for each of the plurality of blocks, determining a sample region in a noise template, including:
defining parameters for sample region determination, including block coordinates for the respective block, a seed value and a preselected constant;
determining a hash index based on the block coordinates, the seed value, and the preselected constant;
mapping the hash index to offsets within the noise template, including an x-offset defining an x-coordinate for the sample region in the noise template and a y-offset defining a y-coordinate for the sample region in the noise template;
applying the sample region to the respective block of the plurality of blocks to synthesize texture in the respective block.

2. The apparatus of claim 1, the operations further comprising:
determining a linear index for the block coordinates based on a number of blocks per row in the decoded image frame.

3. The apparatus of claim 2, wherein determining the linear index includes determining a product of a row index and the number of blocks per row, added to a column index of the block.

4. The apparatus of claim 2 or 3, wherein determining the hash index based on the block coordinates includes determining the hash index based on the linear index for the block coordinates.

5. The apparatus of any one of claims 1-4, wherein mapping the hash index to offsets within the noise template includes:
determining the x-offset as a modulus of the hash index and a valid window width; and
determining the y-offset as an integer division of the hash index by the valid window width.

6. The apparatus of any one of claims 1-5, wherein the offsets can map to any coordinate within the noise template.

7. The apparatus of claim 6, wherein, when a portion of the sample region extends beyond an edge of the noise template, the portion is wrapped around to an opposite side of the noise template.

8. The apparatus of any one of claims 1-7, wherein the noise template is generated based on synthesis parameters, wherein the synthesis parameters are at least one of:
signaled in a video bitstream, and conveyed via metadata.

9. The apparatus of any one of claims 1-8, wherein the preselected constant comprises a prime number.

10. The apparatus of any one of claims 1-9, wherein the seed value is updated for each frame or scene of the decoded image frame.

11. One or more non-transitory computer-readable media storing instructions executable to perform operations, the operations comprising:
receiving a decoded image frame including a plurality of blocks;
for each of the plurality of blocks, determining a sample region in a noise template, including:
defining parameters for sample region determination, including block coordinates for the respective block, a seed value and a preselected constant;
determining a hash index based on the block coordinates, the seed value, and the preselected constant;
mapping the hash index to offsets within the noise template, including an x-offset defining an x-coordinate for the sample region in the noise template and a y-offset defining a y-coordinate for the sample region in the noise template;
applying the sample region to the respective block of the plurality of blocks to synthesize texture in the respective block.

12. The one or more non-transitory computer-readable media of claim 11, the operations further comprising:
determining a linear index for the block coordinates based on a number of blocks per row in the decoded image frame.

13. The one or more non-transitory computer-readable media of claim 12, wherein determining the linear index includes determining a product of a row index and the number of blocks per row, added to a column index of the block.

14. The one or more non-transitory computer-readable media of claim 12 or 13, wherein determining the hash index based on the block coordinates includes determining the hash index based on the linear index for the block coordinates.

15. A computer-implemented method, comprising:
receiving a decoded image frame including a plurality of blocks;
for each of the plurality of blocks, determining a sample region in a noise template, including:
defining parameters for sample region determination, including block coordinates for the respective block, a seed value and a preselected constant;
determining a hash index based on the block coordinates, the seed value, and the preselected constant;
mapping the hash index to offsets within the noise template, including an x-offset defining an x-coordinate for the sample region in the noise template and a y-offset defining a y-coordinate for the sample region in the noise template;
applying the sample region to the respective block of the plurality of blocks to synthesize texture in the respective block.
